# EUROPÄISCHE PATENTANMELDUNG

(11) **EP 0 582 023 A1**
(43) Veröffentlichungstag der Anmeldung: **09.02.1994**
(21) Anmeldenummer: 92810601.2
(22) Anmeldetag: 06.08.1992
(51) Int. Cl.: H04N 7/10

(54) **Fernsehanlage**

(71) Anmelder: FRITZ FISCHER ELEKTRONIK, CH-6282 Urswil LU (CH)
(72) Erfinder: Fischer, Fritz, CH-6028 Herlisberg (CH); Horvath, Emmerich, CH-6207 Nottwil (CH)
(74) Vertreter: AMMANN PATENTANWAELTE AG BERN

(57) **Zusammenfassung**

Uebliche Fernsehempfänger (1) sind über ein gemeinsames Coaxialkabel (3) mit einer Antenne (4) und/oder einem Kabelnetz verbunden. Um auch bei kleinen Teilnehmerzahlen einen kostengünstigen, einfachen Satellitenempfang zu ermöglichen, ist an zentraler Stelle, beispielsweise im Dachgeschoss eines Hauses, jedem Teilnehmer ein Mehrkanal-Satellitenempfänger (7) zugeordnet, welcher mittels eines Codesenders (5) jedes Teilnehmers über das Coaxialkabel (3) und ein dem Satellitenempfänger (7) zugeordnetes Steuergerät (9) gesteuert werden kann. Jedem Teilnehmer bzw. seinem Satellitenempfänger (7) ist ein Modulator (8) zugeordnet, welcher jedes empfangene Satellitenprogramm auf eine dem Teilnehmer zugeordnete Trägerfrequenz umsetzt und auf das gemeinsame Coaxialkabel (3) einspeist.

## Beschreibung

Es sind Fernsehanlagen bekannt mit einem oder mehreren Empfängern bzw. Teilnehmern, mit einem Kabel, über welches der oder die Empfänger mit einer Antenne und/oder einem Kabelnetz und/oder mit einer Satelliten-Empfangsanlage verbunden sind, welche Satellitenprogramme umsetzt und in das Kabel einspeist. Eine solche Anlage mit einer sogenannten Kopfstation ist bekannt, bei welcher die Kopfstation pro Satellitenkanal einen Empfänger und einen Modulator aufweist, womit die zu empfangenden Satellitenkanäle über bestimmte Kanäle aller angeschlossenen Fernsehempfänger über das gemeinsame, bestehende Kabelnetz empfangen werden können. Ein Vorteil dieser Lösung besteht darin, dass beispielsweise in einem Mehrfamilienhaus keine Neuverkabelung erforderlich ist, sondern ein normales, insbesondere das bestehende, gemeinsame Kabel verwendet werden kann. Die erwähnte Kopfstation ist jedoch sehr aufwendig, indem für jeden zu empfangenden Kanal ein Empfänger und ein Modulator erforderlich ist. Diese Ausführung lohnt sich daher nur für grössere Anlagen, bei welchen die Anzahl der Teilnehmer die Anzahl der zu empfangenden Satellitenprogramme übersteigt.

Ziel der Erfindung ist es nun, für kleinere Teilnehmerzahlen eine wirtschaftlich günstige Lösung anzubieten, welche ebenfalls keine Neuverkabelung bei einer bestehenden Anlage und lediglich gewisse Zusatzeinrichtungen bei jedem Fernsehempfänger bzw. Teilnehmer erfordert. Dieses Ziel wird dadurch erreicht, dass die Satelliten-Empfangsanlage für den oder die Empfänger bzw. Teilnehmer einen über das Kabel fernsteuerbaren Mehrkanal-Satellitenempfänger aufweist. Damit reduziert sich die Zahl der erforderlichen Satellitenempfänger und zugeordneten Modulatoren auf die Zahl der Teilnehmer. Eine Erweiterung auf neue Satellitenkanäle ist ohne besonderen Aufwand möglich, solange die vorgesehenen Satellitenempfänger für den Empfang vorbereitet sind.

Die Erfindung wird nun anhand eines in der Zeichnung schematisch dargestellten Ausführungsbeispieles näher erläutert.
Fig. 1 zeigt die Gesamtanlage, und
Fig. 2 zeigt schematisch den Aufbau und die Ansteuerung des Satellitenempfängers eines Teilnehmers.

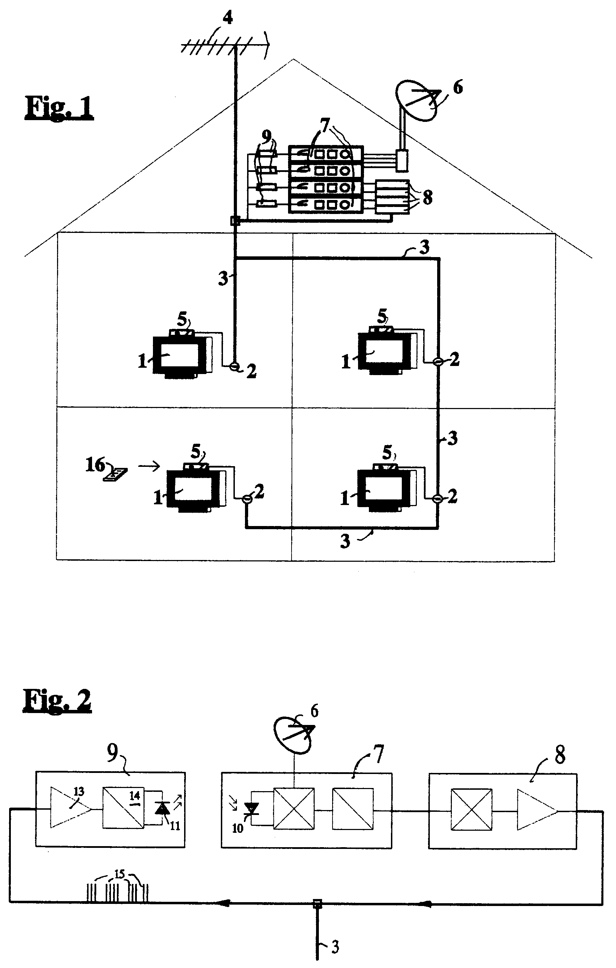

Gemäss Fig. 1 ist angenommen, in einem Mehrfamilienhaus befinden sich vier Teilnehmer mit je einem Fernsehempfänger 1. Ueber Dosen 2 sind diese Empfänger mit einem gemeinsamen Coaxialkabel 3 verbunden, das mit einer Antenne 4 verbunden ist und auch mit einem Kabelnetz verbunden sein kann. Jedem Fernsehempfänger 1 ist ein Codegeber 5 zugeordnet, und all diese Codegeber 5 sind über die Dosen 2 ebenfalls mit dem gemeinsamen Coaxialkabel 3 verbunden. Die Satellitenantenne 6 ist mit den Eingängen je eines Satellitenempfängers 7 verbunden. Die Ausgänge dieser Satellitenempfänger sind mit je einem zugeordneten Modulator 8 verbunden. Jeder dieser Modulatoren 8 moduliert das vom zugeordneten Satellitenempfänger 7 übermittelte Fernsehsignal auf eine einem Teilnehmer bzw. Empfänger 1 zugeordnete Trägerfrequenz. Jeder Teilnehmer hat also seinen Satelliten-Empfangskanal zugeordnet, über welchen er grundsätzlich jeden vom zugeordneten Empfänger 7 empfangbaren Satellitenkanal empfangen kann. Die Wahl des gewünschten Satellitenkanals erfolgt durch Fernsteuerung des jeweiligen Satellitenempfängers 7 mittels zugeordneter Geräten 5 und 9. Mittels des zugeordneten Codesenders 5 wird über das Coaxialkabel 3 das Steuergerät 9 angesteuert, welches seinerseits den Satellitenempfänger 7 steuert.

Fig. 2 zeigt ein Ausführungsbeispiel dieser Ansteuerung. Der Satellitenempfänger 7 ist mit einem Infrarot-Codeempfänger 10 herkömmlicher Art für die Kanalwahl ausgerüstet. Entsprechend ist das Steuergerät 9 mit einer Infrarotquelle 11 ausgerüstet, die über einen Verstärker 13 und einen Demodulator 14 mittels eines Codes 15 von Hochfrequenzimpulsen angesteuert werden kann. Jedem Teilnehmer bzw. jedem Steuergerät ist eine individuelle Sendefrequenz zugeordnet, derart, dass jeder Teilnehmer nur den ihm zugeordneten Satellitenempfänger 7 steuern kann. Mittels der Codesender 5 kann somit jeder Teilnehmer über das Coaxialkabel 3 und das ihm zugeordnete Steuergerät 9 den ihm zugeordneten Satellitenempfänger 7 ein- und ausschalten und den gewünschten Kanal wählen, und er kann jeden beliebigen gewählten Satellitenkanal über den ihm zugeordneten Modulator 8 und den zugeordneten Empfangskanal des Fernsehempfängers 1 empfangen. Wie in Fig. 1 unten links angedeutet, kann dabei der Codesender 5 mittels der bestehenden oder einer besonderen Fernbedienung 16 gesteuert werden. Die Fernbedienung 16 kann dabei so beschaffen sein, dass sie bei der Wahl eines Satellitenkanals, z.B. durch Tastendruck, zugleich den Fernsehempfänger 1 auf den Kanal bzw. die Frequenz für Satellitenempfang und den Codesender 5 zur Uebermittlung des Codes zur Wahl des gewünschten Satellitenkanals an den Satellitenempfänger 7 steuert. Der von der Fernbedienung 16 ausgehende Code kann direkt dem zur Ansteuerung des Satellitenempfängers 7 erforderlichen Code entsprechen. Dabei können zugeordnete Empfänger 1 und 7 auch gemeinsam ein- und ausgeschaltet werden.

Wie erwähnt, kann das Coaxialkabel 3 nicht nur mit einer Antenne 4, sondern zusätzlich oder statt dessen mit einem Kabelnetz verbunden sein. In jedem Falle können über dieses Kabel beliebige bestehende Fernseh- und Radioprogramme empfangen werden, und dieses bestehende System kann mittels der beschriebenen Anlage auch bei kleinen Teilnehmerzahlen sehr günstig für Satellitenempfang ergänzt werden, ohne dass damit irgendwelche bestehenden Möglichkeiten eingeschränkt würden.

Statt der beschriebenen Ansteuerung der Satellitenempfänger 7 mittels Infrarotimpulsen könnte auch eine galvanische Verbindung zwischen diesen Steuergeräten und den Empfängern bestehen, womit die Steuercodes direkt den Empfängern 7 zugeführt würden. Die Steuercodes können aber auch direkt über das Kabel 3 den Satellitenempfängern 7 zugeführt werden. In diesem Fall können die Codes in Form von Gleichstromimpulsen übertragen werden, wobei bekannte Massnahmen getroffen sein können, um Störungen durch gleichzeitig erfolgende Kanalwahl an mehreren Satellitenempfängern zu verhindern.

Die oben beschriebene Anlage würde nicht ausschliessen, dass jeder Teilnehmer seinen Fernsehempfänger 1 auf die Trägerfrequenz irgendeines Modulators 8 abstimmen könnte. Damit würde es möglich zu erfahren, welche Programme ein Mitteilnehmer bzw. die Mitteilnehmer empfangen. Um dies zu verhindern, kann jeder Modulator 8 mit einem Codegeber ausgerüstet werden, welcher einen Codeempfänger im zugeordneten Empfänger 1 ansteuert, um ausschliesslich diesen Empfänger zum Empfang zu befähigen.

## Patentansprüche

1. Fernsehanlage mit einem oder mehreren Empfängern (1) bzw. Teilnehmern, mit einem Kabel (3), über welches der oder die Empfänger mit einer Antenne (4) und/oder einem Kabelnetz und/oder mit einer Satelliten-Empfangsanlage (6 - 9) verbunden sind, welche Satellitenprogramme umsetzt und in das Kabel (3) einspeist, dadurch gekennzeichnet, dass die Satelliten-Empfangsanlage (6 - 9) für den oder die Empfänger (1) bzw. Teilnehmer einen über das Kabel (3) fernsteuerbaren Mehrkanalsatellitenempfänger (7) aufweist.

2. Anlage nach Anspruch 1, dadurch gekennzeichnet, dass jedem Satellitenempfänger (7) ein Modulator (8) mit einer dem Teilnehmer zugeordneten Trägerfrequenz bzw. Empfangsfrequenz zugeordnet ist.

3. Anlage nach Anspruch 2, dadurch gekennzeichnet, dass jeder Modulator (8) einen Codegeber aufweist, welcher einen Codeempfänger im zugeordneten Empfänger (1) ansteuert, um ausschliesslich diesen Empfänger (1) zum Empfang zu befähigen.

4. Anlage nach einem der Ansprüche 1 bis 3, dadurch gekennzeichnet, dass die Fernsteuerung über das Kabel (3) mittels Codes (15) erfolgt.

5. Anlage nach einem der Ansprüche 1 bis 4, dadurch gekennzeichnet, dass jeder Satellitenempfänger (7) durch Codes aus Infrarotimpulsen steuerbar ist, wobei durch das Kabel (3) übertragene Codes in einem Steuergerät (9) in die IR-Impulse umgesetzt werden.

6. Anlage nach einem der Ansprüche 1 bis 4, dadurch gekennzeichnet, dass jeder Satellitenempfänger (7) durch Codes steuerbar ist, die ihm über das Kabel (3) direkt zugeführt werden.

7. Anlage nach einem der Ansprüche 1 bis 6, dadurch gekennzeichnet, dass jedem Empfänger (1) bzw. Teilnehmer ein Codesender (5) zur Fernsteuerung des Satellitenempfängers (7) zugeordnet ist.

8. Anlage nach Anspruch 7, dadurch gekennzeichnet, dass der Codesender (5) mittels einer Fernbedienung (16) steuerbar ist.

9. Anlage nach Anspruch 8, dadurch gekennzeichnet, dass mittels der Fernsteuerung (16) durch Wahl eines Kanals zugleich der Empfänger (1) für Satellitenempfang und der Satellitenempfänger (7) zum Empfang des gewählten Satellitenkanals angesteuert wird.

10. Anlage nach einem der Ansprüche 1 bis 4 und 6 bis 9, dadurch gekennzeichnet, dass jeder Satellitenempfänger (7) galvanisch mit dem Ausgang eines zugeordneten Steuergerätes (9) verbunden ist.
